# EUROPEAN PATENT APPLICATION

(11) **EP 4 567 267 A1**
(43) Date of publication of application: **11.06.2025**
(21) Application number: 24209292.2
(22) Date of filing: 28.10.2024
(51) Int. Cl.: F02D 19/06, F02D 19/08, F02D 41/00, F02M 31/08, F02M 31/18, F02M 37/00

(54) **ENGINE SYSTEM, FUEL VAPORIZATION SYSTEM, AND METHOD FOR VAPORIZING A SECONDARY LIQUID FUEL**

(30) Priority: 31.10.2023 US 202363594724 P
(71) Applicant: Cummins Power Generation Inc., Minneapolis, MN 55432 (US)
(72) Inventor: LUNSFORD, Tyler, Michigan, 49795 (US); DANE, Marten, Indiana, 47203 (US); ISAACS, Matthew, South Carolina, 29486 (US)
(74) Representative: Cleveland Scott York

(57) **Abstract**

An engine system includes an engine, a first fuel injection system, a second fuel injection system, and a fuel vaporization system. The engine includes an intake manifold. The intake manifold is structure to receive charge air. The first fuel injection system is configured to inject a first liquid fuel into the engine. The second fuel injection system is configured to inject a second liquid fuel into the charge air. The second fuel can be different from the first fuel. The fuel vaporization system is configured to heat at least one of (i) the charge air or (ii) the second liquid fuel upstream of where the second liquid fuel is injected into the charge air to enhance vaporization of the second liquid fuel and/or improve combustion characteristics of the engine.

## Description

### CROSS-REFERENCE TO RELATED APPLICATIONS

This application claims the benefit of and priority to U.S. Patent Application No. 63/594,724, filed October 31, 2023.

### TECHNICAL FIELD

The present disclosure relates generally to dual fuel internal combustion engine systems.

### BACKGROUND

Dual fuel internal combustion engine systems include engines that can operate using a mixture of two different fuels. For example, the dual fuel engine may operate using a combination of diesel fuel and biofuel (or another low carbon fuel) such as ethanol or methanol.

### SUMMARY

In a first aspect, the present invention comprises an engine system as claimed in claim 1 of the appended claims. In a second aspect, the present invention comprises a fuel vaporization system as claimed in claim 11 of the appended claims. In a third aspect, the present invention comprises a method as claimed in claim 14 of the appended claims. Optional features are recited in the dependent claims.

One embodiment of the present invention relates to an engine system. The engine system includes an engine, a first fuel injection system, a second fuel injection system, and a fuel vaporization system. The engine includes an intake manifold. The intake manifold is structured to receive charge air. The first fuel injection system is configured to inject a first liquid fuel into the engine. The second fuel injection system is configured to inject a second liquid fuel into the charge air. The second fuel is different from the first fuel. The fuel vaporization system is configured to heat at least one of (i) the charge air or (ii) the second liquid fuel upstream of where the second liquid fuel is injected into the charge air to enhance vaporization of the second liquid fuel.

In various embodiments, the fuel vaporization system is configured to heat the charge air, or cool the air less, upstream of where the second liquid fuel is delivered to the engine. In other embodiments, the fuel vaporization system is configured to heat the charge air downstream of where the second liquid fuel is delivered to the engine. In some embodiments, the fuel vaporization system is configured to heat the second liquid fuel upstream of where the second liquid fuel is delivered to the engine. In some embodiments, the fuel vaporization system is configured to control the charge air temperature and/or the second liquid fuel based on: (i) a flow rate of the second liquid fuel, and (ii) a fuel type. In various embodiments, the fuel vaporization system is configured to heat the second liquid fuel using waste heat from at least one of: an engine coolant, a return fuel, and exhaust gas, or the charge air. In some embodiments, the first liquid fuel is a diesel fuel, and the second liquid fuel is a biofuel or another low carbon liquid fuel.

Another embodiment of the present invention relates to a fuel vaporization system. The fuel vaporization system includes a heating system, a sensor, and a controller. The heating system is configured to couple to an engine or a fuel injection system of a dual fuel engine system that is configured to operate using a combination of a first liquid fuel and a second liquid fuel. The heating system is configured to control heating of the second liquid fuel. The sensor is configured to generate sensor data indicative of a fuel condition of the second liquid fuel. The controller is communicably coupled to the heating system and the sensor. The controller is configured to receive the sensor data from the sensor, and control operation of the heating system to heat the second liquid fuel prior to injection into the engine based on the fuel condition to enhance vaporization of the second liquid fuel and/or improve combustion characteristics of the engine.

Yet another embodiment of the present invention relates to a method for vaporizing a secondary liquid fuel. The method includes receiving data that is indicative of a fuel condition of a second liquid fuel for a dual fuel engine system. The dual fuel engine system is configured to operate using a combination of a first liquid fuel and a second liquid fuel. The method also includes controlling operation of a heating system that is coupled to the dual fuel engine system to heat the second liquid fuel prior to injection into an engine of the dual fuel engine system based on the fuel condition to enhance vaporization of the second liquid fuel and/or improve combustion characteristics of the engine.

It should be appreciated that all combinations of the foregoing concepts and additional concepts discussed in greater detail below are contemplated as being part of the subject matter disclosed herein. In particular, all combinations of claimed subject matter appended at the end of this disclosure are contemplated as being part of the subject matter disclosed herein.

### BRIEF DESCRIPTION OF THE FIGURES

The foregoing and other features of the present disclosure will become more fully apparent from the following description and appended claims, taken in conjunction with the accompanying drawings. Understanding that these drawings depict only several implementations in accordance with the disclosure and are therefore, not to be considered limiting of its scope, the disclosure will be described with additional specificity and detail through use of the accompanying drawings.
FIG. 1 is a schematic diagram of a fuel vaporization system for a second liquid fuel of a dual fuel engine, according to an embodiment.
FIG. 2 is a schematic diagram of a fuel vaporization system for a second liquid fuel of a dual fuel engine that uses waste heat from an exhaust gas recirculation system to heat the second liquid fuel, according to an embodiment.
FIG. 3 is a top cross-sectional view through an engine of a dual fuel engine system, according to an embodiment.
FIG. 4 is a schematic diagram of a fuel vaporization system for a second liquid fuel of a dual fuel engine that is configured to pre-heat the second liquid fuel prior to delivering the second liquid fuel to the engine, according to an embodiment.
FIG. 5 is a block diagram of a controller of a fuel vaporization system for a dual fuel engine system, according to an embodiment.
FIG. 6 is a flow diagram of a method of ensuring vaporization of a second liquid fuel for a dual fuel engine system, according to an embodiment.

Reference is made to the accompanying drawings throughout the following detailed description. In the drawings, similar symbols typically identify similar components, unless context dictates otherwise. The illustrative implementations described in the detailed description, drawings, and claims are not meant to be limiting. Other implementations can be utilized, and other changes can be made. It will be readily understood that the aspects of the present invention, as generally described herein, and illustrated in the figures, can be arranged, substituted, combined, and designed in a wide variety of different configurations, all of which are explicitly contemplated and made part of this disclosure.

### DETAILED DESCRIPTION

Embodiments described herein relate generally to fuel vaporization systems for a second liquid fuel used in dual-fuel internal combustion engine systems. Such dual fuel engine systems operate using a combination of the second liquid fuel (e.g., a secondary liquid fuel) and a first liquid fuel (e.g., a primary liquid fuel). The fuel vaporization system is configured to enhance vaporization of the second liquid fuel and/or improve combustion characteristics, such as combustion temperatures, production of nitrogen oxides (NOX) and/or soot, combustion efficiency, etc. The second liquid fuel can be a biofuel or a low carbon fuel, through one, or a combination of: (i) heating charge air upstream of where the second liquid fuel is injected into the engine system, (ii) heating a mixed air-fuel charge after introduction of the second liquid fuel into the engine system, and/or (iii) heating the second liquid fuel upstream of where the second liquid fuel is injected into the engine system.

As used herein, "charge air" refers to air that has entered the engine system. "Air-fuel charge" as used herein refers to a mixture of the charge air and a fuel (e.g., a secondary fuel) passing through the engine system at any point upstream from a combustion cylinder of the engine. It should be understood that any reference herein to "charge air" also encompasses operating states in which the charge air includes a secondary fuel mixed therewith in alternative embodiments (even if not explicitly recited as "air-fuel charge"), which may pass with the charge air to different parts of the intake system. The charge air may be at ambient temperature and pressure at an inlet to the engine system and may change in condition (e.g., temperature, pressure, etc.) as the charge air passes through the intake system (e.g., across the turbocharger(s), aftercooler(s), intake manifold, etc.) upstream of where the fuel is introduced into the system.

In some embodiments, the second liquid fuel can be a biofuel and/or a low carbon fuel, as noted above. Biofuels and/or low carbon fuels can also reduce the environmental impact of vehicle operation, by reducing both particulate matter emissions and carbon dioxide relative to engines that operate using diesel fuel alone. Thus, in some embodiments, emission reduction can be achievable through the use of biofuels and/or low carbon fuels. Additionally, biofuels and/or low carbon fuels can provide a less expensive alternative to diesel in instances where the biofuels and/or low carbon fuels are available for use. Biofuels and/or low carbon fuels can also provide energy security in regions where diesel might not be as readily available. For example, methanol can be produced from coal instead of crude oil, and can therefore present a viable alternative to operating with the use of diesel alone.

In some embodiments, the fuel vaporization system is configured to utilize waste heat from a heating medium, which can be one, or a combination of, an engine coolant, a return fuel (e.g., a return first liquid fuel and/or a return second liquid fuel), exhaust gas, and/or heated charge air leaving the turbocharger to heat the second liquid fuel. For example, the fuel vaporization system may include at least one heat exchanger disposed along an air intake system of the engine system to heat the charge air or the air-fuel charge (or cool the charge air or air-fuel charge less) prior to supplying the air-fuel charge to the engine. In some embodiments, the heat exchanger may form part of an intake manifold or air intake system of the engine. In other embodiments, the heat exchanger may form part of an intercooler or aftercooler used to cool the charge air leaving at least one turbocharger. In other embodiments, the fuel vaporization system includes a passive heating element such as an electric grid heater (e.g., a resistive heater, etc.), an infrared heater, a ceramic heater, a cartridge heater, a plate heater, or another form of electric heater to heat the charge air, the air-fuel charge, and/or the second liquid fuel.

In some embodiments, the fuel vaporization system is configured to heat the second liquid fuel prior to injecting the second liquid fuel into the air intake system or the engine. For example, the fuel vaporization system may include a heat exchanger disposed along a fluid supply line that is used to provide the second liquid fuel to one or more fuel injectors.

In some embodiments, the fuel vaporization system is configured to control a fuel temperature of the second liquid fuel by heating at least a portion of a second fuel injection system for the second liquid fuel. The fuel vaporization system can be configured to maintain the second fuel temperature above a vaporization temperature of the second liquid fuel after injection into the air intake system.

In other embodiments, such as where heat is supplied to the second liquid fuel after injection, the fuel vaporization system is configured to control heating of the charge air and/or the air-fuel charge based on: (i) a flow rate of the second liquid fuel, and (ii) a fuel type to ensure that the second liquid fuel is sufficiently vaporized upon introduction into the air intake system and to enhance vaporization of the second liquid fuel between the injection point and the engine. In such embodiments, the fuel vaporization system can be configured to control the temperature of the charge air by controlling the amount of heating provided to the second liquid fuel leaving the second fuel injection system and entering the charge air or the charge air farther downstream from the injection point (e.g., the flow rate and temperature of the heating or cooling medium, etc.).

Among other benefits, the engine systems, fuel vaporization systems, and heating methods described herein can enable injection of the secondary fuel into the air intake system upstream of the engine, in a location that allows for retrofit of existing diesel fuel engine systems to enable operation using multiple fuels. The fuel vaporization system can enhance vaporization of the second liquid fuel, such as by ensuring that the second liquid fuel is heated above its boiling point (e.g., dewpoint temperature, etc.) and/or to ensure adequate heat is provided to the second liquid fuel to substantially prevent condensation (e.g., wall wetting, etc.) of the second liquid fuel within the intake system, which can improve combustion characteristics and/or engine performance. Such systems can also reduce operating costs associated with the engine system by enabling the use of low-cost and readily available e-fuels like methanol and other biofuels. The use of biofuels can also reduce greenhouse gas emissions from the engine system, while enabling use of 100% diesel fuel if necessary (such as during cold starts or when biodiesel is unavailable).

The various concepts introduced above and discussed in greater detail below can be implemented in any of numerous ways, as the described concepts are not limited to any particular manner of implementation. Examples of specific implementations and applications are provided primarily for illustrative purposes.

Various numerical values herein are provided for reference purposes only. Unless otherwise indicated, all numbers expressing quantities of properties, parameters, conditions, and so forth, used in the specification and claims are to be understood as being modified in all instances by the term "approximately." Accordingly, unless indicated to the contrary, the numerical parameters set forth in the following specification and attached claims are approximations. Any numerical parameter should at least be construed in light of the number reported significant digits and by applying ordinary rounding techniques. The term "approximately" when used before a numerical designation, *e.g*., a quantity and/or an amount including range, indicates approximations which may vary by ( + ) or ( - ) 10%, 5%, or 1%.

As will be understood by one of skill in the art, for any and all purposes, particularly in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein can be readily broken down into a lower third, middle third and upper third, etc. As will also be understood by one skilled in the art all language such as "up to," "at least," "greater than," "less than," and the like include the number recited and refer to ranges which can be subsequently broken down into subranges as discussed above. Finally, as will be understood by one skilled in the art, a range includes each individual member.

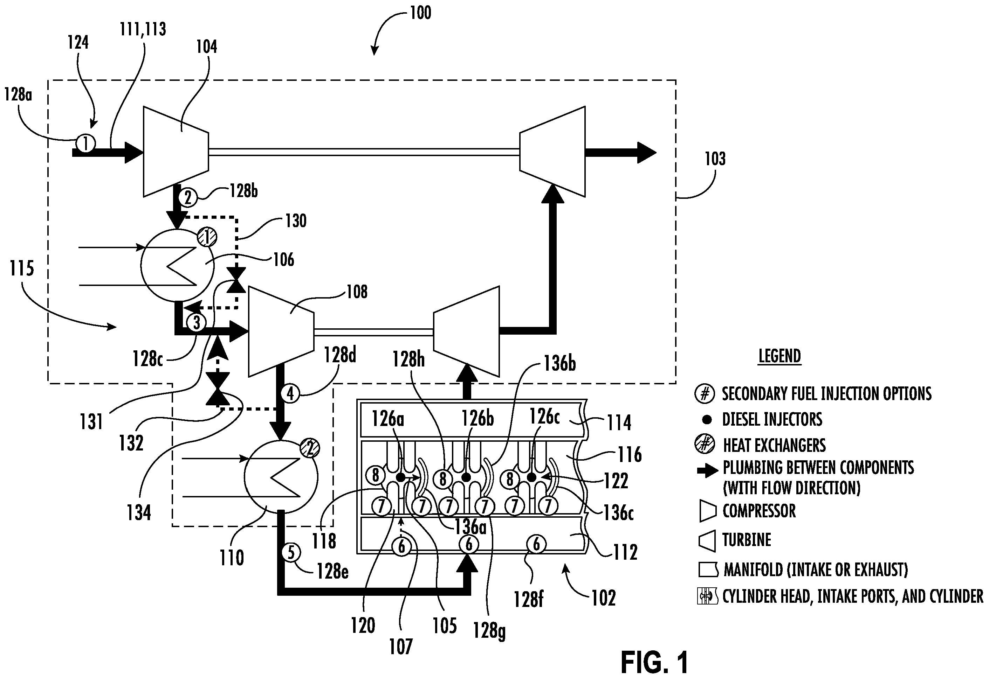

Referring to FIG. 1, a schematic diagram of an internal combustion engine system 100 (e.g., a dual fuel engine system, etc.) having various secondary fuel injection options is shown, according to an embodiment. The engine system 100 includes an intake manifold 112, the intake manifold 112 structure to receive charge air 111; a first fuel injection system 122 configured to inject a first liquid fuel 105 into the engine 102; a second fuel injection system 124 configured to inject a second liquid fuel 107 into the charge air 111, the second liquid fuel 107 being different from the first liquid fuel 105; and a fuel vaporization system 103 configured to heat at least one of (i) the charge air 111 or (ii) the second liquid fuel 107 upstream of where the second liquid fuel 107 is injected into the charge air 111 to enhance vaporization of the second liquid fuel 107 and/or to improve combustion characteristics of the engine.

As used herein, "combustion characteristics" refers to characteristics associated with the combustion process occurring in the internal combustion engine. Combustion characteristics can include a combustion temperature within the combustion cylinder of the internal combustion engine system 100, production of nitrogen oxides (NOX) and/or soot, combustion efficiency, an amount of harmful environmental byproducts resulting from the combustion process, and/or other parameters associated with the combustion process.

The engine system 100 includes an engine 102 (e.g., a long block including an engine block, pistons, heads, a valve train, etc.). The engine system 100 also includes a first fuel injection system 122 configured to inject a first liquid fuel 105 into the engine 102. The engine system 100 additionally includes a second fuel injection system 124 configured to inject a second liquid fuel 107 into the engine 102. In various embodiments, the second liquid fuel 107 is different from the first liquid fuel 105. The engine system 100 also includes a fuel vaporization system 103 configured to heat at least one of charge air 111 or the second liquid fuel 107 upstream of where the second liquid fuel 107 is injected into the charge air 111, the air intake system, or the engine 102 to enhance vaporization of the second liquid fuel 107. In some embodiments, the fuel vaporization system 103 may form part of an air intake system 115 (e.g., an intake manifold 112, an air handling system upstream of the engine 102 and configured to deliver air from an environment surrounding the engine system 100 to the engine 102, etc.) for the engine system 100.

In the embodiment of FIG. 1, the engine system 100 also includes a first stage turbocharger, shown as first turbocharger 104; a first aftercooler 106 (e.g., an intercooler, etc.); a second stage turbocharger, shown as second turbocharger 108; and a second aftercooler 110. In other embodiments, the engine system 100 may include additional or fewer turbochargers and aftercoolers. In various embodiments, the engine system 100 may include at least one supercharger instead of, or in addition to, a turbocharger.

In various embodiments, the engine 102 (e.g., a diesel cycle engine, a spark ignition engine, etc.) is configurable as a dual fuel engine structured to operate using a first liquid fuel 105 and a second liquid fuel 107. More specifically, the dual fuel engine is an engine configured to use the first liquid fuel 105 (e.g., a primary fuel, etc.) from a first fuel source (e.g., a liquid fuel such as diesel fuel) and the second liquid fuel 107 (e.g., a secondary fuel, etc.) from a second fuel source (e.g., a liquid biofuel, etc.). As used herein, "liquid fuel" refers to a fuel that is provided to the engine system 100 in liquid form at atmospheric temperature, although other fuels may also be provided to the engine system 100 in liquid form depending on a pressure and a temperature of the fuel system, and all such liquid fuels should also be considered as falling within the scope of the present disclosure.

In some embodiments, the first liquid fuel 105 and the second liquid fuel 107 have different properties such as different auto-ignition temperatures, flame speeds, etc. In some embodiments, the first liquid fuel 105 is a diesel fuel. The second liquid fuel 107 can be, for example, an e-fuel or liquid biofuel such as methanol and ethanol. In various embodiments, the first liquid fuel 105 or the second liquid fuel 107 can be any one of a high cetane number fuel, such as diesel, gas-to-liquid (GTL) diesel, heavy fuel oil (HFO), low sulfur fuel oil (LFSO), hydrotreated vegetable oil (HVO), marine gas oil (MGO), renewable diesel, biodiesel, paraffinic diesel, dimethyl ether (DME), F-76 fuel, F-34 fuel, jet A fuel, JP-4 fuel, JP-8 fuel, or oxymethylene ether (OME), or a low cetane number fuel (e.g., a high octane number fuel, a high methane number fuel) such as natural gas, hydrogen, ethane, propane, butane, syngas, ammonia, methanol, ethanol or, gasoline. In various embodiments, the first liquid fuel 105 and/or the second liquid fuel 107 can be a blend of fuels. However, as discussed in further detail herein, the foregoing are merely examples of fuels, and other types of first liquid fuels and second liquid fuels are not precluded.

The first liquid fuel 105 and the second liquid fuel 107 can be combined in a blend that is a mixture containing both fuels. In some embodiments, the first liquid fuel 105 and the second liquid fuel 107 are delivered via separate mechanisms. For example, the first liquid fuel 105 may delivered via direct injection into the combustion cylinder(s) 118 of the engine 102, and the second liquid fuel 107 may delivered via a different introduction point such as a second injector in the combustion cylinder(s) 118 or via a port injector in the intake manifold 112. In some embodiments, the engine 102 is configured to receive a mixture of the first liquid fuel 105 and the second liquid fuel 107, and to determine whether to adjust one or more of the plurality of operational parameters such as the fuel composition corresponding to a ratio of the first liquid fuel 105 to the second liquid fuel 107 in a fuel mixture. In some embodiments, the ratio of fuels is adjusted to attain a target combustion performance.

In some embodiments, the engine 102 is configured in a Vee block arrangement. In other embodiments, the engine 102 is an in-line engine, or another engine configuration. In some embodiments, the engine 102 is a 4-stroke engine. In other embodiments, the engine is a 2-stroke engine. In various embodiments, the engine 102 is configured to be a high horsepower (HHP) engine, such as, for example, an engine capable of providing power in the range of 500 hp to 4,500 hp or more. The engine system 100 is configurable to power an electric power generator (e.g., genset, etc.) used to produce electricity (e.g., power), an alternator, or the like. In one embodiment, the engine 102 is coupled to the generator by, for example, a driveshaft (not shown). In other embodiments, the engine system 100 is utilizable in a marine application (e.g., to power a boat), a mining application (e.g., to power a haul truck and/or excavator), or a rail application (e.g., to power a locomotive). In other embodiments, the engine system 100 is utilizable to power another type of vehicle (e.g., an on-road or off-road vehicle). In yet other embodiments, the engine system 100 is utilizable in an industrial application to drive a pump, hydraulic system, or another type of system.

The first fuel injection system 122 is configured to supply the first liquid fuel 105 to the engine 102. The first fuel injection system 122 may include a first fuel source which can be, for example, a first fuel tank that is configurable to receive the first liquid fuel 105. In some embodiments, the first fuel injection system 122 includes a fuel pump or another type of liquid driver that transfers the first liquid fuel 105 from the first fuel tank to the engine, or to a pressurized fuel rail onboard the engine. In at least one embodiment, the first fuel injection system 122 includes at least one first liquid fuel injector 126a-126c (collectively, first liquid fuel injectors 126) that is configured to inject fuel directly into a combustion cylinder 118 of the engine 102. The first liquid fuel injector(s) 126 can be primary fuel injector(s). In some embodiments, the first liquid fuel injector(s) 126 includes nozzles that are configured to aerosolize the first liquid fuel 105 and to facilitate mixing of the first liquid fuel 105 in the combustion cylinder 118.

In some embodiments, the second fuel injection system 124 is arranged similar to the first fuel injection system 122. The second fuel injection system 124 may include a second fuel source which can be, for example, a second fuel tank that is configured to receive the second liquid fuel 107. In some embodiments, the second fuel injection system 124 includes a fuel pump or another type of liquid driver that transfers the second liquid fuel 107 from the second fuel tank to the engine 102. In various embodiments, the second fuel injection system 124 also includes at least one second liquid fuel injector 128a-128h (collectively, second liquid fuel injectors 128). The second liquid fuel injector(s) 128 can be a secondary fuel injector(s) that is configured to inject the second liquid fuel 107 and/or to aerosolize at least a portion of the second liquid fuel 107 upon injection. It should be understood that in various embodiments, the second fuel injection system 124 also includes heaters to heat the secondary fuel either upstream, downstream, or at a location of each second liquid fuel injector 128.

In some embodiments, the second fuel injection system 124 is configured to inject or otherwise provide the second liquid fuel 107 upstream of the engine 102. For example, the second fuel injection system 124 may include a first injector 128a disposed upstream of the air intake system, such as upstream of the first turbocharger 104. In some embodiments, the second fuel injection system 124 includes an injector(s) disposed at an outlet of the first turbocharger 104 and/or the second turbocharger 108 (shown as a second injector 128b and a fourth injector 128d, respectively). In yet additional embodiments, the second fuel injection system 124 includes an injector(s) disposed at an outlet of the first aftercooler 106 and/or the second aftercooler 110 (shown as a third injector 128c and/or a fifth injector 128e, respectively).

In some embodiments, the second fuel injection system 124 includes a sixth injector 128f that is configured to inject or otherwise provide the second liquid fuel 107 to the engine 102 through the intake manifold 112, for example, through at least one port along the intake manifold 112, such as by port injection. In some embodiments, the second fuel injection system 124 includes a seventh injector 128g that is disposed at a location that is proximate to the combustion cylinder 118, such as within at least one intake port 120 of the engine 102 that extends between the intake manifold 112 and the combustion cylinder 118.

In some embodiments, the second fuel injection system 124 is configured to inject or otherwise provide the second liquid fuel 107 directly to the combustion cylinder 118. For example, the second fuel injection system 124 may include an eighth injector 128h that is arranged to inject or otherwise provide the second liquid fuel 107 directly into the combustion cylinder 118. In such embodiments, the fuel vaporization system 103 is configured to heat the second liquid fuel 107 upstream of where the second liquid fuel 107 is injected into the combustion cylinder 118, as will be further described.

The fuel vaporization system 103 is configured to facilitate vaporization of the second liquid fuel 107 and to prevent condensation of the second liquid fuel upstream of the engine 102. The fuel vaporization system 103 includes at least one heating device, such as an active heater or heat exchanger. In some embodiments, the fuel vaporization system 103 is configured to use an existing heat exchanger that is part of the air intake system. For example, the fuel vaporization system 103 may use the first aftercooler 106 and/or the second aftercooler 110 to heat charge air 111 upstream and/or downstream of where the second liquid fuel 107 is injected into the engine system 100 (e.g., into the charge air 111). For example, the first aftercooler 106 can be used to heat a first compressed charge air 111 entering the first aftercooler 106. The second aftercooler 110 can be used to heat a second compressor charge air 111 entering the second aftercooler 110. In other embodiments, the fuel vaporization system 103 is configured to heat the charge air 111 both upstream and downstream of where the second liquid fuel 107 is injected into the charge air 111.

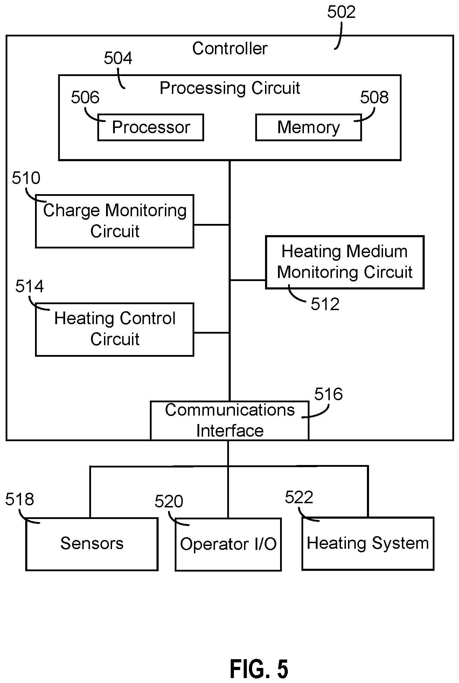

In some embodiments, and as will be further described with reference to FIGS. 5-6, the fuel vaporization system 103 includes a controller that is communicably coupled to the first aftercooler 106 and/or the second aftercooler 110, such as a flow control device (e.g., a pump, a valve, etc.) of the first aftercooler 106 and/or the second aftercooler 110, and/or a heating element associated with the first aftercooler 106 and/or the second aftercooler 110. The controller can be configured to control operation of the first aftercooler 106 and/or the second aftercooler 110 (e.g., the flow control device and/or the heating element, etc.) based on a fuel condition of the second liquid fuel (e.g., based on sensor data indicative of a temperature of the second liquid fuel, based on fuel data regarding the second liquid fuel stored in memory, and/or another fuel condition of the second liquid fuel, etc.) to control heating of the charge air 111 and/or an air-fuel charge 113 that includes the second liquid fuel (see FIG. 1).

The first aftercooler 106 and/or the second aftercooler 110 may include heat exchangers that utilize engine coolant (e.g., a low temperature engine coolant, a high temperature engine coolant, etc.) to cool the charge air 111. In other embodiments, the first aftercooler 106 and/or the second aftercooler 110 include forced air heat exchangers configured to transfer heat from the charge air 111 to air at ambient temperature flowing across the heat exchanger(s).

It should be appreciated that other heating devices can be used in place of or in combination with the first aftercooler 106 and/or the second aftercooler 110 to heat the charge air 111 and/or the air-fuel charge resulting from introduction of the second liquid fuel 107 into the charge air 111. For example, the engine system 100 may include heat exchangers that utilize waste engine heat to increase a temperature of the charge air 111 and/or the air-fuel charge. The waste heat can be provided by a heating medium. For example, the waste heat can be provided by lube oil used to lubricate the engine 102, an exhaust gas, return and/or bypass fuel from the engine 102 including return first liquid fuel and/or return second liquid fuel from a fuel bypass loop, or another engine cooling liquid and/or lubricant.

In some embodiments, the fuel vaporization system 103 can be configured to control one, or a combination of, a flow rate of the heating medium and/or a temperature of the heating medium through the at least one heat exchanger.

In some embodiments, the engine system 100 also includes at least one heat exchanger bypass loop 130. The heat exchanger bypass loop 130 may include a heat exchanger bypass valve 131 that is configured to control an amount of bypass across the at least one heat exchanger, which can reduce the amount of cooling provided by the at least one heat exchanger to the charge air 111 and/or the air-fuel charge.

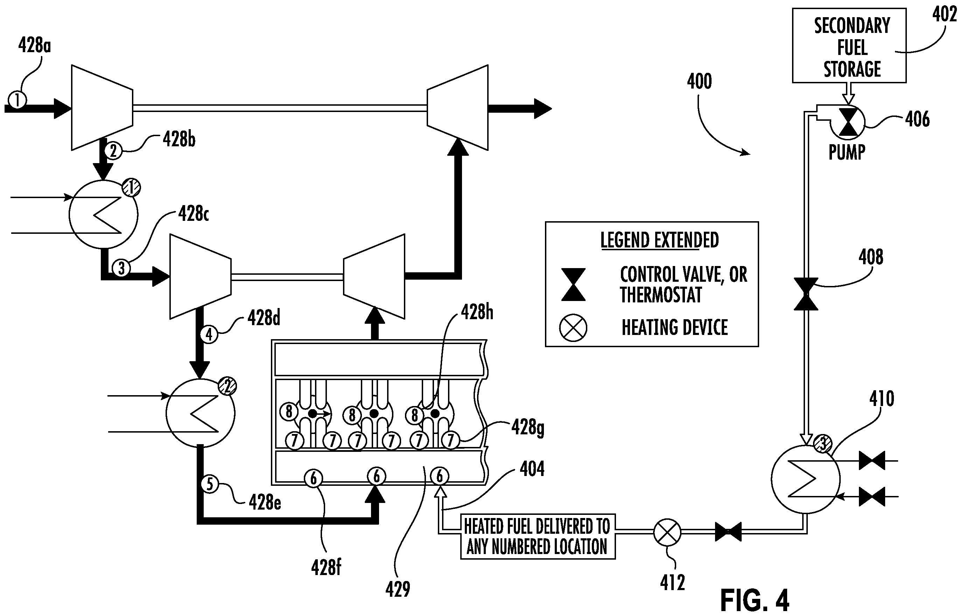

Alternatively, or in combination, the engine system 100 may include active heaters, such as an electric grid heater (e.g., a resistive heater, etc.), an infrared heater, a ceramic heater, a cartridge heater, or another form of electric heater to heat the charge air 111 and/or the air-fuel charge. The active heaters can be applied to walls (e.g., surfaces) of the flow conduits and/or directly to various components of the engine system 100. In some embodiments, an active heater is applied to the fluid supply lines for the second liquid fuel 107 and/or adjacent to a connection between the injector(s) 128 and the air intake system. In some embodiments, the active heater is applied to a surface of the air intake system adjacent to a location where the second liquid fuel is delivered to the air intake system, such that the fuel vaporization system 103 includes at least one heated surface downstream of where the second liquid fuel is delivered to the charge air 111 (see, for example, FIG. 4). The heated surface can be defined, for example, by a heated wall of the intake manifold or another heated wall or wall portion along the air intake system. The fuel vaporization system 103 can be configured to selectively control operation of the active heaters (e.g., between an on state and an off state, an amount of current supplied to the electric heaters, etc.) based on a temperature of the charge air 111, air-fuel charge, and/or the second liquid fuel 107 (upstream of where the second liquid fuel 107 is injected into the air intake system).

In various embodiments, the heat exchangers are configured to selectively reduce the cooling provided to the charge air 111 and/or the air-fuel charge when the engine 102 is being operated in a dual fueling mode, such as when both the first liquid fuel 105 and the second liquid fuel 107 are being provided to the engine 102 simultaneously. In some embodiments, the fuel vaporization system 103 is configured to control cooling provided by the heat exchangers to ensure that the second liquid fuel 107 is fully vaporized while preventing additional heating that could reduce engine performance, as will be further described.

It should be appreciated that different methods can be used to heat the charge air 111, air-fuel charge, and/or second liquid fuel 107. In some embodiments, the fuel vaporization system 103 is configured to heat the charge air 111 upstream where the second liquid fuel 107 is delivered to the charge air 111 (e.g., the intake manifold, the engine 102, etc.). In other embodiments, the fuel vaporization system 103 is configured to heat (or reduce cooling provided to) the charge air 111 downstream of where the second liquid fuel 107 is delivered to the charge air 111 (e.g., the intake manifold, the engine 102, etc.). In yet other embodiments, the fuel vaporization system 103 is configured to heat the second liquid fuel 107 upstream of where the second liquid fuel 107 is delivered to the charge air 111 (e.g., the intake manifold, the engine 102, etc.).

In one embodiment, the fuel vaporization system 103 is configured control operation of the first turbocharger 104 and/or the second turbocharger 108 to selectively increase the temperature of the charge air 111 leaving the turbocharger(s) during operation. For example, and as will be described in more detail with reference to FIGS. 5-6, the fuel vaporization system 103 can include a controller that is communicably coupled to the turbocharger. The controller may be configured to control operation of the turbocharger based on a fuel condition of the second liquid fuel (e.g., based on sensor data indicative of a temperature of the second liquid fuel, based on fuel data regarding the second liquid fuel stored in memory, etc., and/or another fuel condition of the second liquid fuel, etc.) to control heating of the charge air 111.

For example, the turbocharger(s) can be a variable geometry turbocharger that enables changing the operating point of the turbocharger and the aerodynamic efficiency of the turbocharger to change an amount of heat provided to the charge air (e.g., to a first charge air entering the first turbocharger 104, to a second charge air entering the second turbocharger 108, etc.). In some embodiments, the engine system 100 and/or turbocharger(s) include an exhaust throttle to increase flow restriction downstream of the turbocharger(s). By controlling the geometry of the turbocharger(s) and/or the flow resistance downstream of the turbocharger(s), the fuel vaporization system 103 may operate the turbocharger(s) at a less efficient operating point causing a greater increase in temperature across the turbocharger(s).

In some embodiments, as reflected in FIG. 1, the engine system 100 includes at least one compressor bypass loop 132 extending between an outlet of at least one of the turbocharger(s) (e.g., a compressor of the turbocharger(s)) and an inlet of the at least one turbocharger(s). The compressor bypass loop(s) 132 can be configured to recirculate a portion of the charge air 111 and/or air-fuel charge passing through the turbocharger(s) (e.g., based on a position of a compressor bypass valve 134), thereby increasing the overall flow rate through the turbocharger(s) and the temperature of the fluid entering the turbocharger(s) without increasing the flow rate of charge air 111 entering the engine 102.

In various embodiments, the fuel vaporization system 103 is configured to control a flow rate of engine coolant through the engine 102 to modulate the temperature of the air-fuel charge entering the combustion cylinder(s) 118. For example, the fuel vaporization system 103 can be configured to control the flow rate of engine coolant through at least one water jacket 136a-136c of the cylinder head of the engine 102, and/or through other parts of the engine 102 to control the temperature of the air-fuel charge.

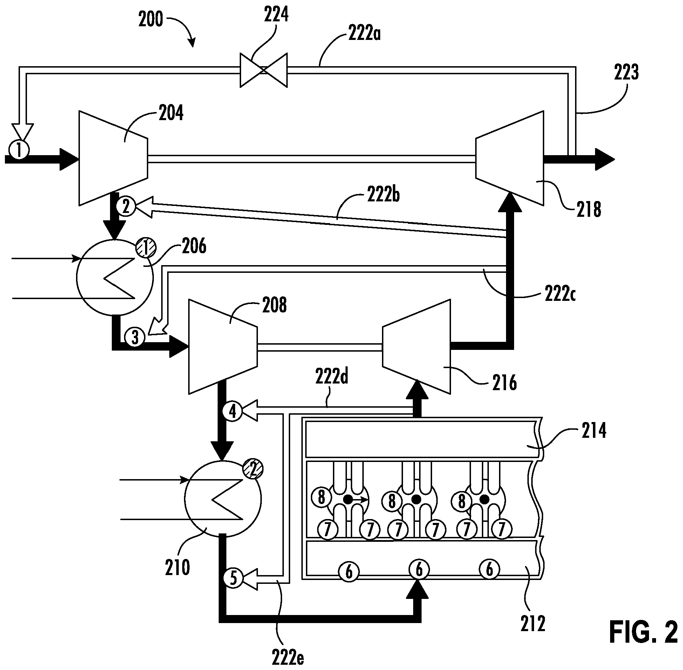

In some embodiments, the engine system 100 is configured to recirculate hot exhaust gases to heat the charge air 111 and/or the air-fuel charge. For example, referring to FIG. 2, another example engine system 200 is shown that includes an exhaust gas recirculation (EGR) system. The EGR system includes at least one recirculation loop 222a-222e (collectively, recirculation loops 222) that is configured to recirculate exhaust gas 223 back to the charge air and/or air-fuel charge to increase the temperature of the charge air and/or air-fuel charge. The location of the recirculation loops 222 in FIG. 2 is provided for illustrative purposes only and it should be understood that various modifications are possible without departing from the inventive principles disclosed herein. For example, in some embodiments, the EGR system may also include bypass loops around one or more heat exchangers and/or compressors as described with respect to FIG. 1 (e.g., the at least one heat exchanger bypass loop 130, the at least one compressor bypass loop 132, etc.). Additionally, in various embodiments, the EGR system also includes bypass valves in at least one of the recirculation loops 222, which allow the system to selectively control temperatures of the charge-air entering the intake manifold.

For example, the engine system 200 may include: (i) a first recirculation loop 222a extending between an outlet of a first turbine 218 of a first turbocharger and an inlet of a first compressor 204 of the first turbocharger; (ii) a second recirculation loop 222b extending between an inlet of the first turbine 218 and an outlet of the first compressor 204; (iii) a third recirculation loop 222c extending between the inlet of the first turbine 218 and an outlet of a first aftercooler 206 located between the first turbocharger and the second turbocharger; (iv) a fourth recirculation loop 222d extending between an inlet of a second turbine 216 of a second turbocharger (e.g., between an exhaust manifold 214 and the second turbine 216) and an outlet of a second compressor 208 of the second turbocharger; and/or (v) a fifth recirculation loop 222e extending between the inlet of the second turbine 216 and an outlet of a second aftercooler 210 (between the second aftercooler 210 and the intake manifold 212).

In some embodiments, the recirculation loop(s) 222 include at least one recirculation loop valve 224 that is controllable by the fuel vaporization system 103 to control a flow rate of exhaust gas passing through the EGR system. For example, and as will be further described with reference to FIGS. 5-6, the fuel vaporization system 103 can include a controller that is communicably coupled to the recirculation loop valve 224. The controller can be configured to control operation of the recirculation loop(s) 222 (e.g., the recirculation loop valve 224, etc.) based on a fuel condition of the second liquid fuel (e.g., based on sensor data indicative of a temperature of the second liquid fuel, based on fuel data regarding the second liquid fuel stored in memory, and/or another fuel condition of the second liquid fuel, etc.) to control heating of the charge air 111 and/or the air-fuel charge.

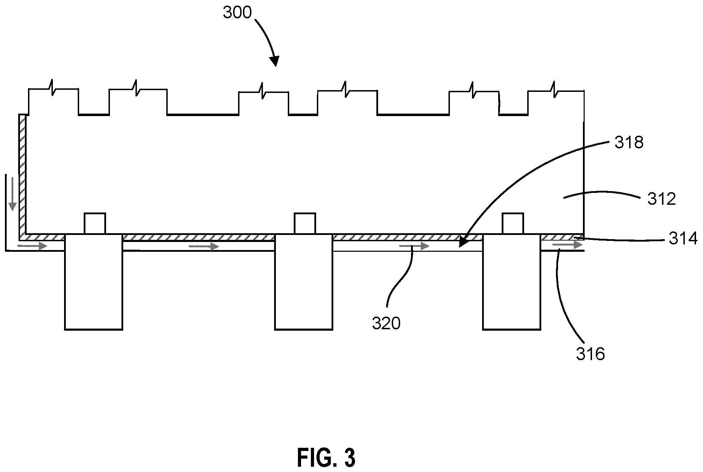

In various embodiments, as described above, at least one component of the engine system is structured to form a heat exchanger to recover waste heat from the engine system. For example, referring to FIG. 3, an example engine system 300 is shown that includes an intake manifold 312 that forms part of a crossflow heat exchanger for the engine system 300.

The intake manifold 312 includes a double layered wall, including an inner wall 314 and an outer wall 316 that together define a cooling channel 318. The fuel vaporization system can be configured to control a flow rate and/or a temperature of a heating medium 320 passing through the cooling channel 318 to control heating of the inner wall 314 and the air-fuel charge moving through the intake manifold 312 toward the combustion cylinder(s). The heating medium can include at least one of a return fuel, a coolant, a dedicated heating fluid, and/or another heat transfer fluid. It should be appreciated that other components of the engine system 300 may also be adapted to form part of a waste heat exchanger for the engine system 300.

In various embodiments, as described above, the engine system can be configured to pre-heat the second liquid fuel prior to providing the second liquid fuel to the air intake system and/or engine. For example, referring to FIG. 4, an example second fuel injection system 400 is shown that is configured to pre-heat the second liquid fuel prior to injection.

The second fuel injection system 400 includes a second fuel source which can be, for example, a second fuel tank 402 that is configured to receive the second liquid fuel 404. In some embodiments, the second fuel injection system 400 includes a fuel pump 406 or another type of liquid driver that transfers the second liquid fuel 404 from the second fuel tank 402 to the engine (e.g., to an intake manifold of an engine and/or another component of an air intake system). The second fuel injection system 400 also includes at least one second liquid fuel injector 428a-428h (collectively, second liquid fuel injectors 428). The second liquid fuel injector(s) 428 can be a secondary fuel injector(s) that is configured to inject the second liquid fuel 404 and/or to aerosolize at least a portion of the second liquid fuel 404 upon injection.

In some embodiments, the second fuel injection system 400 includes a control valve 408 and/or a thermostat that is configured to control a flow resistance downstream of the fuel pump 406. The fuel vaporization system can be configured to control the control valve 408 and/or thermostat to control a temperature of the second liquid fuel 404 leaving the second fuel injection system 400.

In some embodiments, the second fuel injection system 400 includes at least one heat exchanger 410 and/or at least one active heater 412 to enable the fuel vaporization system to control the temperature of the second liquid fuel 404. The second fuel injection system 400 may also include any one of the various heating devices described herein to enable heating of the second liquid fuel prior to injection.

In some embodiments, as described with reference to FIG. 1, the fuel vaporization system includes a heated surface defined by a heated wall and/or wall portion of the air intake system. For example, as shown in FIG. 4, the fuel vaporization system can include a heated surface 429 positioned adjacent to a location at which the second liquid fuel is delivered to the air intake system. In such embodiments, the second fuel injection system 400 can be arranged to inject the second liquid fuel toward the heated surface 429 to control the temperature of the second liquid fuel and to facilitate vaporization. In some embodiments, the fuel vaporization system includes an active heater thermally coupled to the heated surface and configured to control heating of the heated surface 429 based on a fuel condition of the second liquid fuel (e.g., based on sensor data indicative of a temperature of the second liquid fuel, based on fuel data regarding the second liquid fuel stored in memory, and/or another fuel condition of the second liquid fuel, etc.).

Referring to FIG. 5, a control system 500 for a fuel vaporization system is shown, according to an embodiment. The fuel vaporization system (e.g., the control system 500) includes a heating system 522, a sensor 518, and a controller 502. The heating system 522 is configured to couple to an engine or a fuel injection system of a dual fuel engine system that is configured to operate using a combination of a first liquid fuel and a second liquid fuel. The heating system 522 is configured to control heating of the second liquid fuel. The sensor 518 is configured to generate sensor data indicative of a fuel condition of the second liquid fuel. The controller 502 is communicably coupled to the heating system 522 and the sensor 518. The controller 502 is configured to receive the sensor data from the sensor 518, and control operation of the heating system 522 to heat the second liquid fuel prior to injection into the engine based on the fuel condition to enhance vaporization of the second liquid fuel and/or improve combustion characteristics of the engine.

The control system 500 includes a controller 502. The controller 502 (e.g., a control unit, etc.) is configured to interpret data from various sensors disposed within an engine system and to control various components of the engine system based on the data.

The controller 502 can be structured as one or more electronic control units (ECUs). In some embodiments, the controller 502 includes multiple sub-controllers. In other embodiments, the controller 502 is a distributed controller. As such, the controller 502 can be separate from or included with at least one of an engine control unit for the engine system.

In various embodiments, the controller 502 includes a processing circuit 504 having a processor 506 and a memory 508. In some embodiments, the controller 502 also includes various control circuits to coordinate operation of the fuel vaporization system. For example, the controller 502 may include a charge monitoring circuit 510, a heating device monitoring circuit 512, and/or a heating (or cooling reduction) control circuit 514. In some embodiments, the controller 502 additionally includes a communications interface 516 that communicably couples the controller 502 to various other components of the engine system.

In one configuration, the charge monitoring circuit 510, the heating device monitoring circuit 512, and/or the heating control circuit 514 are configured by computer-readable media that are executable by a processor, such as the processor 506. As described herein and amongst other uses, the circuitry facilitates performance of certain operations to enable reception and transmission of data. For example, the circuitry may provide an instruction (e.g., command, etc.) to, e.g., acquire data. In this regard, the circuitry may include programmable logic that defines the frequency of acquisition of the data and/or other aspects of the transmission of the data. In particular, the circuitry can be implemented by computer readable media which may include code written in any programming language including, but not limited to, Java, JavaScript, Python or the like and any conventional procedural programming languages, such as the "C" programming language or similar programming languages. The computer readable program code can be executed on one processor or multiple remote processors. In the latter scenario, the remote processors can be connected to each other through any type of network (e.g., a controller area network (CAN) bus, etc.).

In another configuration, the charge monitoring circuit 510, the heating device monitoring circuit 512, and/or the heating control circuit 514 are embodied as hardware units, such as electronic control units. As such, the charge monitoring circuit 510, the heating device monitoring circuit 512, and/or the heating control circuit 514 can be embodied as one or more circuitry components including, but not limited to, processing circuitry, network interfaces, peripheral devices, input devices, output devices, sensors, etc.

In some embodiments, the charge monitoring circuit 510, the heating device monitoring circuit 512, and/or the heating control circuit 514 may take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the charge monitoring circuit 510, the heating device monitoring circuit 512, and/or the heating control circuit 514 may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on.

The charge monitoring circuit 510, the heating device monitoring circuit 512, and/or the heating control circuit 514 may also include programmable hardware devices such as field programmable gate arrays, programmable array logic, programmable logic devices or the like. In this regard, the charge monitoring circuit 510, the heating device monitoring circuit 512, and/or the heating control circuit 514 may include one or more memory devices for storing instructions that are executable by the processor(s) of the charge monitoring circuit 510, the heating device monitoring circuit 512, and/or the heating control circuit 514. The one or more memory devices and processor(s) may have the same definition as provided below with respect to the memory 508 and the processor 506. Thus, in this hardware unit configuration, the charge monitoring circuit 510, the heating device monitoring circuit 512, and/or the heating control circuit 514 can be dispersed throughout separate locations in the engine system (e.g., as separate control units, etc.). Alternatively, and as reflected in FIG. 5, the charge monitoring circuit 510, the heating device monitoring circuit 512, and/or the heating control circuit 514 can be embodied in or within a single unit/housing, which is shown as the controller 502.

In the example shown, the processing circuit 504 can be configured to execute or implement the instructions, commands, and/or control processes described herein with respect to the charge monitoring circuit 510, the heating device monitoring circuit 512, and/or the heating control circuit 514. Thus, the depicted configuration represents the aforementioned arrangement where the charge monitoring circuit 510, the heating device monitoring circuit 512, and/or the heating control circuit 514 are embodied as machine or computer-readable media. However, as mentioned above, this illustration is not meant to be limiting as the present disclosure contemplates other embodiments such as the aforementioned embodiment where the charge monitoring circuit 510, the heating device monitoring circuit 512, and/or the heating control circuit 514, or at least one circuit of the charge monitoring circuit 510, the heating device monitoring circuit 512, and/or the heating control circuit 514, are configured as a hardware unit. All such combinations and variations are intended to fall within the scope of the present disclosure.

The processor 506 can be implemented as one or more general-purpose processors, an application specific integrated circuit (ASIC), one or more field programmable gate arrays (FPGAs), a digital signal processor (DSP), a group of processing components, or other suitable electronic processing components. In some embodiments, the processor 506 is shared by multiple circuits (e.g., the charge monitoring circuit 510, the heating device monitoring circuit 512, and/or the heating control circuit 514 may comprise or otherwise share the same processor 506 which, in some example embodiments, may execute instructions stored, or otherwise accessed, via different areas of memory 508).

Alternatively, or in combination, the processor 506 can be one of a plurality of processors that is configured to perform or otherwise execute certain operations independent of one or more co-processors. In other example embodiments, two or more processors can be coupled via a bus to enable independent, parallel, pipelined, or multi-threaded instruction execution. All such variations are intended to fall within the scope of the present disclosure.

The memory 508 (e.g., RAM, ROM, Flash Memory, hard disk storage, etc.) may store data and/or computer code for facilitating the various processes described herein. The memory 508 can be communicably connected to the processor 506 to provide computer code or instructions to the processor 506 for executing at least some of the processes described herein. Moreover, the memory 508 can be or include tangible, non-transient volatile memory or nonvolatile memory. Accordingly, the memory 508 may include database components, object code components, script components, or any other type of information structure for supporting the various activities and information structures described herein.

The communications interface 516 may include wired and/or wireless interfaces (e.g., jacks, antennas, transmitters, receivers, transceivers, wire terminals, etc.) for conducting data communications with various components of the engine system. For example, the communications interface 516 may include an Ethernet card and port for sending and receiving data via an Ethernet-based communications network and/or a Wi-Fi transceiver for communicating via a wireless communications network. The communications interface 516 can be structured to communicate via local area networks or wide area networks (e.g., the Internet, etc.) and may use a variety of communications protocols (e.g., IP, local area network (LAN), controller area network (CAN), J1939, local interconnect network (LIN), Bluetooth, ZigBee, radio, cellular, near field communication, etc.).

The communications interface 516 of the controller 502 is configured to facilitate communication between and amongst the controller 502 and various components of the engine system. Referring still to FIG. 5, the communications interface 516 is configured to coordinate the transmission and reception of data between the controller 502, at least one sensor 518, a human-machine interface (shown as operator input/output (I/O) 520), and the components of the engine system that are configured to enable controlled heating of a second liquid fuel (shown as heating system 522).

The charge monitoring circuit 510 is configured to monitor a fluid condition of one, or a combination of, the charge air, the air-fuel charge, and/or the second liquid fuel. In some embodiments, the charge monitoring circuit 510 is configured to receive sensor data from the at least one sensor 518 and to determine the fluid condition based on the sensor data.

In some embodiments, the sensor data is indicative of the fluid condition. For example, the sensor data can be indicative of a flow rate (e.g., a volumetric flow rate, a mass flow rate, etc.) of the charge air, the air-fuel charge, and/or the second liquid fuel. In other embodiments, the sensor data can be indicative of a temperature or a pressure of the charge air, the air-fuel charge, and/or the second liquid fuel. In at least one embodiment, the sensors 518 are positioned in different areas of the engine system to determine changes in fluid conditions during system operation.

In yet additional embodiments, the sensor data is indicative of a composition of the air-fuel mixture. For example, the sensor data can be indicative of a substitution rate of the second liquid fuel, a fueling rate of the first liquid fuel, a fueling rate of the second liquid fuel, or another parameter indicative of a mixed fuel composition.

In some embodiments, the charge monitoring circuit 510 is configured to receive an indication of one or more operating parameters for the engine system based on input to the operator I/O 520.

In some embodiments, the charge monitoring circuit 510 is configured to determine a heating requirement and/or a charge temperature setpoint based on the fluid condition and/or input from the operator I/O 520. For example, the charge monitoring circuit 510 can be configured to calculate a charge temperature setpoint based on a latent heat of vaporization of the secondary liquid fuel being injected or from various other fluid properties stored in memory 508.

In various embodiments, the heating device monitoring circuit 512 is configured to monitor a fluid condition of a heating medium passing through one or more heat exchangers of the engine system. Alternatively, or in combination, the heating device monitoring circuit 512 can be configured to monitor an operating status of an electrical grid heater or another active heating device. In yet other embodiments, the heating device monitoring circuit 512 can be configured to monitor a surface temperature of one or more components of the engine system, such as a turbocharger operating temperature, a temperature of a wall of an intake manifold, or a temperature of another component.

In yet additional embodiments, the heating device monitoring circuit 512 is configured to monitor other engine operating parameters that are indicative of waste heat being generated by the engine system. For example, the heating device monitoring circuit 512 can be configured to measure, or otherwise determine, engine power or another engine operating parameter that is indicative of waste heat transfer to the heating medium.

In some embodiments, the heating device monitoring circuit 512 is configured to determine a target flow rate and/or a target temperature of the heating medium that satisfies the heating requirement and/or the charge temperature setpoint (as determined by the charge monitoring circuit 510), as will be further described.

The heating control circuit 514 is configured to control operation of the heating system 522 based on information from the charge monitoring circuit 510, the heating device monitoring circuit 512, and/or the operator I/O 520. The heating control circuit 514 can be configured to selectively control operation of one or more heating devices. For example, the heating control circuit 514 can be configured to transmit control signals to one or more control valves to change a flow rate of engine coolant or another engine fluid through a heat exchanger disposed along the air intake system. In some embodiments, the heating control circuit 514 is configured to control fluid bypass across one or more heat exchangers, or to control fluid recirculation through one or more turbochargers. The heating control circuit 514 may also be configured to selectively control activation and deactivation of one or more active heating devices.

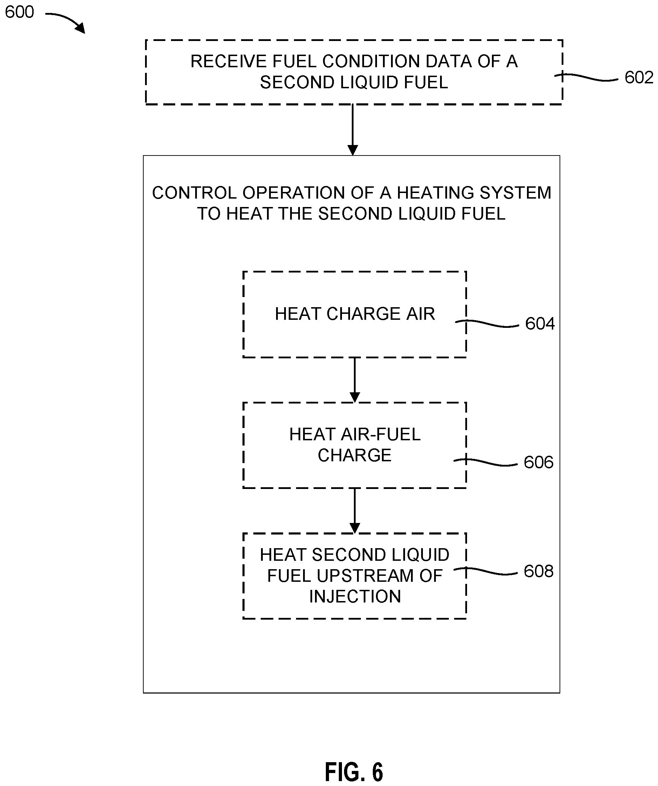

Referring to FIG. 6, a method 600 of vaporizing a second liquid fuel to facilitate introduction of the second liquid fuel into a dual fuel engine system is shown, according to at least one embodiment. The method 600 can be implemented with any of the engine systems described with reference to FIGS. 1-4 and the control system 500 described with reference to FIG. 5. In other embodiments, the method 600 may include additional, fewer, and/or different operations.

In some embodiments the method 600 includes receiving data that is indicative of a fuel condition of a second liquid fuel for a dual fuel engine system. The dual fuel engine system can be configured to operate using a combination of a first liquid fuel and a second liquid fuel. The method 600 can further includes controlling operation of a heating system that is coupled to the dual fuel engine system and/or that forms part of the dual fuel engine system to heat the second liquid fuel prior to injection into an engine of the dual fuel engine system based on the fuel condition to enhance vaporization of the second liquid fuel and/or improve combustion characteristics of the engine.

In some embodiments, the method 600 optionally includes receiving data that is indicative of a fuel condition of the second liquid fuel, at operation 602. In some embodiments. operation 602 includes receiving sensor data indicative of the fuel condition from a sensor that is coupled to the dual fuel engine system and/or to a second fuel injection system that is configured to inject the second liquid fuel. The sensor data can be indicative of a temperature of the second liquid fuel, a type of the second liquid fuel, a dewpoint of the second liquid fuel, or another fuel condition. In other embodiments, operation 602 can include retrieving fuel data regarding the second liquid fuel from memory of the control system (e.g., memory 508 described with reference to FIG. 5).

The method 600 includes controlling operation of a heating system that is coupled to the dual fuel engine system to heat the second liquid fuel using any one, or a combination of, the processes described in operations 604, 606, and 608.

In some embodiments, the method 600 optionally includes controlling operation of the heating system by heating charge air passing through an air intake system of the dual fuel engine system upstream of where the second liquid fuel is delivered to the charge air, at operation 604. In some embodiments, operation 604 includes controlling charge temperature upstream of where a second liquid fuel is injected into an air intake system. In operation 604, the charge temperature is a temperature of the charge air entering the air intake system. Operation 604 may include controlling any one of the heating devices disposed along the air intake system to control the charge temperature (e.g., to remove heat from the charge, to add heat to the charge, and/or to control how much of the charge is cooled by one or more aftercoolers). Operation 604 can include controlling the heating system to heat the second liquid fuel based on the fuel condition, such as to ensure more complete vaporization of the second liquid fuel (e.g., heating above the dewpoint of the second liquid fuel prior to injection, etc.).

In some embodiments, operation 604 includes implementing closed-loop control (e.g., feedback control) to control the charge temperature to satisfy a charge temperature setpoint. As used herein, "satisfy" refers to controlling a measured parameter based on a setpoint parameter until a desired operating condition is achieved. For example, and depending upon the context in which it is used, "satisfy" may refer to a condition in which the charge temperature (or another measured parameter) is one of less than, greater than, within a threshold range of, or approximately equal to the charge temperature setpoint (or another setpoint value). The charge temperature set point can be a fixed setpoint value stored in memory of the controller.

In other embodiments, operation 604 includes determining the charge temperature setpoint from a lookup table, a calibratable table, or an algorithm as a function of a type of second liquid fuel, or other sensed or targeted parameters. For example, operation 604 may include determining the charge temperature setpoint based on a latent heat of vaporization of the second liquid fuel being injected. In such embodiments, operation 604 may include using values from physical or virtual sensors to determine at least one of: a flow rate of the second liquid fuel being injected, a charge flow rate of charge air through the air intake system, a temperature of the upstream charge air, a temperature of the second liquid fuel being injected or other fluid conditions of the second liquid fuel, such as injection pressure, fuel consumption, etc. In yet other embodiments, the charge temperature set point can be a user-specified setpoint value received from the operator I/O.

For example, operation 604 may include controlling the fuel vaporization system (e.g., the heating system) based on the charge temperature set point so that the charge has sufficient available heat energy such that after vaporization and/or mixing of the secondary liquid fuel with the charge air, the final temperature of the air-fuel charge exceeds or otherwise satisfies a dewpoint of water and a dewpoint of the second liquid fuel. In this context, "satisfy" refers to a condition in which the temperature of the air-fuel charge is greater than, or exceeds by a dewpoint margin, both the dewpoint of water and the dewpoint of the second liquid fuel.

In other embodiments, operation 604 includes controlling the fuel vaporization system so that the charge has sufficient available heat energy to vaporize the second liquid fuel at a rate that satisfies a threshold engine performance and/or a threshold engine durability. Such a control algorithm may result in higher or lower charge temperatures that the dewpoint-based control operations described above.

In some embodiments, the method 600 optionally includes controlling a charge temperature downstream of where the second liquid fuel is injected into the air intake system (e.g., controlling a temperature of an air-fuel charge), at 606. For example, operation 606 can include controlling the heating system (e.g., the heating system 522) to heat an air-fuel charge downstream of where the second liquid fuel is injected into the air intake system. In operation 606, the charge temperature is a temperature of the air-fuel charge of a mixture of the second liquid fuel with the charge air. Operation 606 may include controlling any one of the heating devices (e.g., the flow control devices and/or heating devices associated with the aftercooler, the flow control devices associated with the recirculation loop(s) and/or bypass loops, etc.) disposed along the air intake system to control the temperature of the air-fuel charge (e.g., to remove heat from the air-fuel charge, to add heat to the air-fuel charge, and/or to control how much of the air-fuel charge is cooled through one or more aftercoolers). For example, operation 606 can include controlling a flow rate of coolant through the aftercooler of the engine system based on a fuel condition of the second liquid fuel.

In some embodiments, operation 606 includes implementing closed-loop control (e.g., feedback control) to control the temperature of the air-fuel charge to satisfy a final charge temperature setpoint. The final charge temperature set point can be a fixed setpoint value stored in memory of the controller.

In other embodiments, operation 606 includes determining the final charge temperature setpoint from a lookup table, a calibratable table, or an algorithm as a function of other sensed or targeted parameters such as substitution rate, engine power, a fueling rate of the second liquid fuel, a fueling rate of a first liquid fuel, or another known or derived parameter.

For example, operation 606 may include controlling the fuel vaporization system so that the temperature of the air-fuel charge exceeds the dewpoint of water and the dewpoint of the second liquid fuel. In this context, "satisfy" refers to a condition in which the temperature of the air-fuel charge is greater than, or exceeds by a dewpoint margin, both the dewpoint of water and the dewpoint of the second liquid fuel.

In other embodiments, operation 606 includes controlling the fuel vaporization system so that the second liquid fuel is vaporized at a rate that satisfies threshold performance and/or threshold durability requirements for the engine system. Such a control algorithm may result in higher or lower charge temperatures that the dewpoint-based control operations described above.

In some embodiments, operation 604 and/or operation 606 includes implementing a threshold-based control technique to control the charge temperature upstream and/or downstream from where the second liquid fuel is injected. For example, the fuel vaporization system can be configured to control a heating device (e.g., an active heating device and/or a heat exchanger between an "on" condition in which the device is activated, and an "off' condition in which the device is deactivated.

For example, operation 604 and/or operation 606 may include switching the device to the "on" condition when an engine system operating condition is less than or equal to a lower threshold value, and switching the device to the "off' condition when the engine system operating condition is greater than or equal to an upper threshold value.

In some embodiments, the lower threshold value can be a fixed value from memory or based on a user input from the operator I/O. For example, the lower threshold can be one, or a combination of, fluid conditions and/or engine operating conditions that indicate that heating of the charge air and/or air-fuel charge is needed. In other embodiments, the fuel vaporization system (e.g., the controller) can be configured to determine the lower threshold value using a lookup table, a calibratable table, or an algorithm as a function of any sensed or targeted parameter that affects or indicates a likelihood of vaporization of the second liquid fuel, such as a substitution rate of the second liquid fuel, an engine power, a fueling rate of the second liquid fuel, a fueling rate of the first liquid fuel, or another engine system operating parameter.

In some embodiments, the fuel vaporization system (e.g., the controller) is configured to calculate the lower threshold based on the latent heat of vaporization of the second liquid fuel being injected. For example, operation 604 and/or operation 606 may include determining the lower threshold using values from physical or virtual sensors for any one, or a combination of, a flow rate of the second liquid fuel being injected, a flow rate of charge air and/or air-fuel charge moving through the air intake system, a temperature of the second liquid fuel being injected, and/or other fluid conditions of the second liquid fuel, such as injection pressure, a composition of the second liquid fuel, or other fluid conditions.

The upper threshold can be a fixed value from memory or based on a user input from the operator I/O. In other embodiments, the fuel vaporization system (e.g., the controller) can be configured to determine the upper threshold value using a lookup table, a calibratable table, or an algorithm as a function of any sensed or targeted parameter. The use of lower and upper thresholds can provide sufficient hysteresis to avoid on/off chatter of the valves and other heating devices, while achieving the performance and durability requirements for the engine system.

In some embodiments, the method 600 optionally includes controlling a temperature of the second liquid fuel at a location prior to where the second liquid fuel is injected into the air intake system, at 608. In some embodiments, operation 608 includes implementing closed-loop control (e.g., feedback control) to control the temperature of the second liquid fuel to satisfy a second liquid fuel temperature setpoint. In one embodiment, operation 608 includes controlling the temperature of the second liquid fuel (e.g., measured by a temperature sensor adjacent to an outlet of the second fuel injection system) to satisfy a second liquid fuel temperature setpoint that has been found to aid in vaporization. In such embodiments, operation 608 may include determining the second liquid fuel temperature setpoint from a lookup table, a calibratable table, or an algorithm. For example, operation 608 may include determining the second liquid fuel temperature setpoint using a parametric equation of vaporization temperature from various engine system or fluid conditions of the second liquid fuel.

In other embodiments, operation 608 includes increasing the temperature of the second liquid fuel to such a point that the second liquid fuel has sufficient heat to boil and vaporize upon delivery into the charge air stream. In such embodiments, operation 608 may include determining a second energy rate of the second liquid fuel and a first energy rate of the charge air. For example, operation 608 may include determining the second energy rate and the first energy rate based on sensor data from at least one physical or virtual sensor. Operation 608 may include determining the second liquid fuel temperature setpoint so that the energy difference or ratio between the second energy rate and the first energy rate is sufficiently high that the second liquid fuel will fully vaporize upon being injected into the charge air.

In some embodiments, the fuel vaporization system is also configured to control a pressure of the second liquid fuel either independently from, or in combination with the temperature of the second liquid fuel, to enable heating of the second liquid fuel to the second liquid fuel temperature setpoint. Such an arrangement can prevent boiling of the second liquid fuel in the fuel supply lines prior to injection.

Operation 608 may include heating the second liquid fuel by controlling a mass flow rate or volumetric flow rate of a heating medium through at least one heating device (e.g., a heat exchanger) using one, or a combination of, a control valve, pump speed control, and/or flow diversion (e.g., fluid bypass across at least one turbocharger, increasing or otherwise controlling EGR, etc.). In some embodiments, operation 608 includes controlling an active heating device to control heat transfer to the second liquid fuel directly and/or indirectly by the heating medium.

The heating medium can include an engine coolant, a return and/or bypass flow of the second liquid fuel and/or the first liquid fuel, exhaust gas from the engine, charge air, or a combination thereof. The fuel vaporization system can be configured to control a flow rate and/or a temperature of the heating medium being introduced to at least one heat exchanger along the second fuel injection system. The at least one heat exchanger can be sized to increase the temperature of the second liquid fuel without requiring the use of auxiliary heaters. In some embodiments, the at least one heat exchanger also includes or is fluidly connected with a thermostat that is configured to regulate a flow of the second liquid fuel and/or the heating medium to prevent overheating conditions that could adversely affect engine performance. In such embodiments, the fuel vaporization system can be operated without the use of closed-loop control algorithms or an active controller.

The present technology can also include, but is not limited to, the features and combinations of features recited in the following lettered paragraphs, it being understood that the following paragraphs should not be interpreted as limiting the scope of the claims as appended hereto or mandating that all such features must necessarily be included in such claims:
A. An engine system comprising:
   an engine including an intake manifold, the intake manifold structured to receive charge air;
   a first fuel injection system configured to inject a first liquid fuel into the engine;
   a second fuel injection system configured to inject a second liquid fuel into the charge air, the second liquid fuel being different from the first fuel; and
   a fuel vaporization system configured to heat at least one of (i) the charge air or (ii) the second liquid fuel upstream of where the second liquid fuel is injected into the charge air to enhance vaporization of the second liquid fuel and/or improve combustion characteristics of the engine.
B. The engine system of paragraph A, wherein the fuel vaporization system is configured to heat the charge air upstream of where the second liquid fuel is delivered to the charge air.
C. The engine system of paragraph A, wherein the fuel vaporization system is configured to heat the charge air downstream of where the second liquid fuel is delivered to the charge air.
D. The engine system of paragraph A, wherein the fuel vaporization system is configured to heat the second liquid fuel upstream of where the second liquid fuel is delivered to the charge air.
E. The engine system of any one of paragraphs A to D, wherein the fuel vaporization system is configured to control heating of the charge air or the second liquid fuel based on at least one of a flow rate of the second liquid fuel, or a fuel type.
F. The engine system of any one of paragraphs A to E, wherein the fuel vaporization system is configured to heat the second liquid fuel using waste heat from at least one of an engine coolant, a return fuel, an exhaust gas, or the charge air.
G. The engine system of paragraph A, wherein the fuel vaporization system includes at least one heated surface downstream of where the second liquid fuel is delivered to the charge air.
H. The engine system of paragraph A, further comprising a turbocharger, wherein the fuel vaporization system comprises a controller configured to control operation of the turbocharger based on a condition of the second liquid fuel to control heating of the charge air.
I. The engine system of paragraph A, wherein the second fuel injection system is configured to inject the second liquid fuel into the charge air to generate an air-fuel charge, the fuel vaporization system comprising:
   a recirculation loop that is configured to recirculate exhaust gas back to the charge air and/or the air-fuel charge; and
   a controller configured to control operation of the recirculation loop based on a condition of the second liquid fuel.
J. The engine system of paragraph A, further comprising an aftercooler, wherein the fuel vaporization system comprises a controller that is configured to control operation of the aftercooler based on a condition of the second liquid fuel.
K. The engine system of any one of paragraphs A to J, wherein the first liquid fuel is a diesel fuel, and wherein the second liquid fuel is a biofuel.
L. A fuel vaporization system comprising:
   a heating system configured to couple to an engine or a fuel injection system of a dual fuel engine system, the dual fuel engine system configured to operate using a combination of a first liquid fuel and a second liquid fuel, the heating system configured to control heating of the second liquid fuel;
   a sensor configured to generate sensor data indicative of a fuel condition of the second liquid fuel; and
   a controller communicably coupled to the heating system and the sensor, the controller configured to:
      receive the sensor data from the sensor; and
      control operation of the heating system to heat the second liquid fuel prior to injection into the engine based on the fuel condition to enhance vaporization of the second liquid fuel and/or improve combustion characteristics of the engine.
M. The fuel vaporization system of paragraph L, further comprising:
   determining a charge temperature set point based on a latent heat of vaporization of the liquid fuel; and
   controlling the heating system based on the charge temperature set point and the sensor data.
N. The fuel vaporization system of paragraph M, wherein the controller is further configured to control the heating system so that a final temperature of an air-fuel charge entering the engine exceeds a dewpoint of water and a dewpoint of the second liquid fuel.
O. The fuel vaporization system of paragraph L, wherein the heating system comprises an aftercooler of the dual fuel engine system, and wherein the controller is further configured to control a flow rate of fluid through the aftercooler based on the sensor data.
P. The fuel vaporization system of paragraph L, wherein the heating system comprises a recirculation loop that is configured to recirculate exhaust gas back to an air intake system of the dual fuel engine system, and wherein the controller is further configured to control a flow rate of the exhaust gas through the recirculation loop based on the sensor data.
Q. The fuel vaporization system of paragraph L, wherein the heating system comprises a turbocharger, wherein the controller is further configured to control operation of the turbocharger based on the sensor data.
R. A method for vaporizing a secondary liquid fuel, the method comprising:
   receive data that is indicative of a fuel condition of a second liquid fuel for a dual fuel engine system, the dual fuel engine system configured to operate using a combination of a first liquid fuel and the second liquid fuel; and
   control operation of a heating system that is coupled to the dual fuel engine system to heat the second liquid fuel prior to injection into an engine of the dual fuel engine system based on the fuel condition to enhance vaporization of the second liquid fuel and/or improve combustion characteristics of the engine.
S. The method of paragraph R, wherein controlling operation of the heating system comprises heating charge air passing through an air intake system of the dual fuel engine system upstream of where the second liquid fuel is delivered to the charge air.
T. The method of paragraph R, wherein controlling operation of the heating system comprises heating charge air passing through an air intake system of the dual fuel engine system downstream of where the second liquid fuel is delivered to the charge air.

It should be noted that the term "example" as used herein to describe various embodiments is intended to indicate that such embodiments are possible examples, representations, and/or illustrations of possible embodiments (and such term is not intended to connote that such embodiments are necessarily extraordinary or superlative examples).

As utilized herein, the term "substantially" and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

It is important to note that the construction and arrangement of the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, orientations, etc.) without materially departing from the novel teachings and advantages of the subject matter described herein. Other substitutions, modifications, changes and omissions may also be made in the design, operating conditions and arrangement of the various exemplary embodiments without departing from the scope of the embodiments described herein.

While this specification contains specific implementation details, these should not be construed as limitations on the scope of any embodiment or of what may be claimed, but rather as descriptions of features specific to particular implementations of particular embodiments. Certain features described in this specification in the context of separate implementations can also be implemented in combination in a single implementation. Conversely, various features described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

## Claims

1. An engine system comprising:
an engine including an intake manifold, the intake manifold structured to receive charge air;
a first fuel injection system configured to inject a first liquid fuel into the engine;
a second fuel injection system configured to inject a second liquid fuel into the charge air, the second liquid fuel being different from the first liquid fuel; and
a fuel vaporization system configured to heat at least one of (i) the charge air or (ii) the second liquid fuel upstream of where the second liquid fuel is injected into the charge air to enhance vaporization of the second liquid fuel and/or improve combustion characteristics of the engine.

2. The engine system of claim 1, wherein the fuel vaporization system is configured to heat the charge air upstream of where the second liquid fuel is delivered to the charge air; or to heat the charge air downstream of where the second liquid fuel is delivered to the charge air.

3. The engine system of claim 1 or claim 2, wherein the fuel vaporization system is configured to heat the second liquid fuel upstream of where the second liquid fuel is delivered to the charge air.

4. The engine system of any one of the preceding claims, wherein the fuel vaporization system is configured to control heating of the charge air or the second liquid fuel based on at least one of a flow rate of the second liquid fuel, or a fuel type.

5. The engine system of any one of the preceding claims, wherein the fuel vaporization system is configured to heat the second liquid fuel using waste heat from at least one of an engine coolant, a return fuel, an exhaust gas, or the charge air.

6. The engine system of any one of the preceding claims, wherein the fuel vaporization system includes a heated surface downstream of where the second liquid fuel is delivered to the charge air.

7. The engine system of any one of the preceding claims, further comprising a turbocharger, wherein the fuel vaporization system comprises a controller configured to control operation of the turbocharger based on a fuel condition of the second liquid fuel to control heating of the charge air.

8. The engine system of any one of the preceding claims, wherein the second fuel injection system is configured to inject the second liquid fuel into the charge air to generate an air-fuel charge, the fuel vaporization system comprising:
a recirculation loop that is configured to recirculate exhaust gas back to the charge air and/or the air-fuel charge; and
a controller configured to control operation of the recirculation loop based on a fuel condition of the second liquid fuel.

9. The engine system of any one of the preceding claims, further comprising an aftercooler, wherein the fuel vaporization system comprises a controller that is configured to control operation of the aftercooler based on a fuel condition of the second liquid fuel.

10. The engine system of any one of the preceding claims, wherein the first liquid fuel is a diesel fuel, and wherein the second liquid fuel is a biofuel.

11. A fuel vaporization system comprising:
a heating system configured to couple to an engine or a fuel injection system of a dual fuel engine system, the dual fuel engine system configured to operate using a combination of a first liquid fuel and a second liquid fuel, the heating system configured to control heating of the second liquid fuel;
a sensor configured to generate sensor data indicative of a fuel condition of the second liquid fuel; and
a controller communicably coupled to the heating system and the sensor, the controller configured to control operation of the heating system to heat the second liquid fuel prior to injection into the engine based on the fuel condition to enhance vaporization of the second liquid fuel and/or improve combustion characteristics of the engine.

12. The fuel vaporization system of claim 11, wherein the controller is further configured to:
determine a charge temperature set point based on a latent heat of vaporization of the second liquid fuel; and
control the heating system based on the charge temperature set point and the sensor data
and optionally wherein the controller is further configured to control the heating system so that a final temperature of an air-fuel charge entering the engine exceeds a dewpoint of water and a dewpoint of the second liquid fuel.

13. The fuel vaporization system of claim 11, wherein the heating system comprises at least one of:
- an aftercooler of the dual fuel engine system, wherein the controller is further configured to control a flow rate of fluid through the aftercooler based on the sensor data;
- a recirculation loop that is configured to recirculate exhaust gas back to an air intake system of the dual fuel engine system, wherein the controller is further configured to control a flow rate of the exhaust gas through the recirculation loop based on the sensor data; and
- a turbocharger, wherein the controller is further configured to control operation of the turbocharger based on the sensor data.

14. A method for vaporizing a secondary liquid fuel, the method comprising:
receive data that is indicative of a fuel condition of a second liquid fuel for a dual fuel engine system, the dual fuel engine system configured to operate using a combination of a first liquid fuel and the second liquid fuel; and
control operation of a heating system that is coupled to an engine of the dual fuel engine system or a fuel injection system of the dual fuel engine system to heat the second liquid fuel prior to injection into the engine based on the fuel condition to enhance vaporization of the second liquid fuel and/or improve combustion characteristics of the engine.

15. The method of claim 14, wherein controlling operation of the heating system comprises heating charge air passing through an air intake system of the dual fuel engine system upstream of where the second liquid fuel is delivered to the charge air; or wherein controlling operation of the heating system comprises heating charge air passing through an air intake system of the dual fuel engine system downstream of where the second liquid fuel is delivered to the charge air.
